# EUROPÄISCHE PATENTSCHRIFT

(11) **EP 0 929 413 B1**
(45) Veröffentlichungstag und Bekanntmachung des Hinweises auf die Patenterteilung: **12.10.2005**
(21) Anmeldenummer: 98945013.5
(22) Anmeldetag: 14.07.1998
(51) Int. Cl.: B60N 2/02, B60N 2/28

(54) **KINDERSITZ**
CHILD SEAT
SIEGE DE SECURITE POUR ENFANT

(30) Priorität: 07.08.1997 DE 19734104; 13.12.1997 DE 19755523; 13.12.1997 DE 19755524; 13.12.1997 DE 19755522
(43) Veröffentlichungstag der Anmeldung: 21.07.1999
(60) Teilanmeldung: 05008865.7
(73) Patentinhaber: Recaro GmbH & Co. KG, 73230 Kirchheim/Teck (DE)
(72) Erfinder: BRANKE, Ute, D-73230 Kirchheim (DE); RAGER, Bernd, D-73266 Bissingen (DE); HELLER, René, D-88512 Mengen (DE); FREY, Achim, D-73312 Geislingen (DE); KÖBER, Toni, D-71332 Waiblingen (DE); MALSCH, Heiko, D-73092 Heiningen (DE); SCHULZE, Ingo, D-73730 Esslingen (DE); BERTENBURG, Peter, D-89275 Elchingen (DE); LACHENMANN, Jürgen, D-72622 Nürtingen (DE)
(74) Vertreter: Held, Thomas
(86) Internationale Anmeldenummer: PCT/DE1998/002012
(87) Internationale Veröffentlichungsnummer: WO 1999/007573

(56) Entgegenhaltungen:
- EP-A- 0 049 680
- WO-A-94/04389
- DE-A- 2 128 927
- DE-A- 4 140 638
- DE-U- 9 102 850
- FR-A- 1 539 731
- GB-A- 2 256 364
- US-A- 4 915 447

## Beschreibung

Die Erfindung betrifft einen Kindersitz, insbesondere einen Kindersitz für ein Kraftfahrzeug, mit den Merkmalen des Oberbegriffs des Anspruches 1.

Es sind eine Vielzahl von Kindersitzen bekannt. Am häufigsten sind sogenannte Schalensitze, deren Komponenten Sitzteil, Rückenlehne und Kopfstütze sich aus Halbschalen zusammensetzen. Teilweise ist eine Größenanpassung an ein wachsendes Kind zugelassen, indem die Abstände der Schalenteile zueinander veränderlich sind. Allerdings sind die Schalenteile selber in der Regel als Kunststoffteile starr ausgebildet und erlauben daher nur eine geringe Anpassung an das wachsende Kind. Auf Dauer sind die Sitze nicht komfortabel und genügen nicht den orthopädischen Anforderungen. Gehalten wird das Kind entweder durch einen eigenen Gurt des Kindersitzes oder durch einen Sicherheitsgurt des Fahrzeugsitzes, auf den der Kindersitz gestellt wurde. Die zweite Variante bringt zwar eine bessere Einleitung der auf das Kind wirkenden Kräfte in das Fahrzeug im Falle eines Crashs, jedoch können insbesondere kleinere Kinder aufgrund der Nachgiebigkeit des Sicherheitsgurtes bei langsamen Bewegungen nur unzureichend im Kindersitz gehalten werden.

Ein Kindersitz der eingangs genannten Art ist aus der DE 41 40 638 A1 bekannt, bei dem in einer ersten Ausführung die Rückenlehne in verschiedene Ausnehmungen eines für die Sitzflächenkonstruktion vorgesehenen Unterbaus steckbar ist. In einer zweiten Ausführung sind in der Sitzflächenkonstruktion und der Rücklehne länglicher Trägern mit Lochreihen vorgesehen, gegenüber welchen die Sitzflächenkonstruktion und die Rücklehne mittels Verschieben einstellbar und mittels seitlicher Stifte festlegbar sind. Die FR 1 539 731 A und die US 4 915 447 A offenbaren einen Fahrzeugsitz eines Erwachsenen vor, bei dem ein vorderes Sitzschalenteil mittels Schienenführungen relativ zu einem hinteren Sitzschalenteil verschieblich einstellbar und beispielsweise mittels Schrauben festlegbar ist.

Der Erfindung liegt daher die Aufgabe zugrunde, einen Kindersitz der eingangs genannten Art zu verbessern. Diese Aufgabe wird erfindungsgemäß gelöst durch einen Kindersitz mit den Merkmalen des Anspruchs 1. Vorteilhafte Ausgestaltungen sind Gegenstand der Unteransprüche.

Dadurch, dass die Festlegevorrichtung selber wenigstens einen Teil der Sitzfläche definiert, verringert sich Anzahl der verwendeten Bauteile, was die Herstellung des Kindersitzes kostengünstiger macht. Mit dem Einstellen des Sitzflächen ist eine Anpassung an das fortlaufende Wachstum des Kindes, insbesondere von neun Monaten bis zwölf Jahren, möglich. Das Kind kann dann, abgestimmt auf seine Beinlänge, seine Beine bequem und mit sicherem Halt über die Sitzfläche hinunter hängen oder auf die Sitzfläche auflegen. Die Anpassung kann am einfachsten am nicht eingebauten Kindersitz vorgenommen und je nach Wachstumsgeschwindigkeit des Kindes gelegentlich geändert werden.

Bei einer bevorzugten einfachen Ausführung einer solchen einstellbaren Sitzfläche ist der einstellbare Teil der Sitzflächenkonstruktion als Bügel ausgebildet, welcher von Führungsbuchsen geführt innerhalb eines Wegbereiches verfahrbar ist, wobei die Führungsbuchsen vorzugsweise an seitlichen Teilen des Kindersitzes befestigt sind.

Eine bevorzugte, einfache und zugleich stabile Konstruktion für die Festlegevorrichtung ergibt sich, wenn die Festlegevorrichtung den Bügel mit wenigstens einer zwischen zwei Seitenteilen der Sitzflächenkonstruktion verlaufenden Quertraverse lösbar verbindet. Die Festlegevorrichtung kann dabei mit einer Aufnahme an ihrem vorderen Ende in den Bügel eingehängt sein. Mit mehreren Rippen in ihrem hinteren Bereich zum Einhängen in die Quertraverse bietet die Festlegevorrichtung die Möglichkeit, den Bügel in unterschiedlichen Abständen zur Quertraverse zu halten und zugleich festzulegen.

Eine einfache und sicher zu handhabende Möglichkeit zum Lösen der Festlegevorrichtung ergibt sich, wenn die Festlegevorrichtung um den Bügel schwenkbar ist mit der Aufnahme als Lager. Damit die Festlegevorrichtung sich nicht versehentlich vom Bügel löst oder sich anderswo verklemmt, wird der Schwenkbereich der Festlegevorrichtung vorzugsweise durch an der Sitzflächenkonstruktion vorgesehene Mittel und/oder an der Festlegevorrichtung vorgesehene Mittel begrenzt. Ein solches Mittel kann die in der Sitzflächenkonstruktion zum Tragen der Polsterung eingespannte Matte bilden.

Die Festlegevorrichtung ist vorteilhafterweise zugleich als Rampe ausgebildet, die von hinten nach vorne ansteigt, damit das Kind im Falle einer starken Verzögerung des Fahrzeuges nicht unter dem Sicherheitsgurt hindurch taucht.

Dadurch, dass die Rückenlehne eine Gurthaltervorrichtung aufweist, die in wenigstens einer Betriebsart einen Sicherheitsgurt in eine Zugrichtung klemmt und in die andere Zugrichtung freigibt, kann der Sicherheitsgurt leicht und sicher am Kindersitz befestigt und wieder entfernt werden. Die erforderliche Unsymmetrie in den beiden möglichen Zugrichtungen wird durch den schwenkbaren, exzentrisch gelagerten Gurthalter erreicht. Wenn die Gurthaltervorrichtung als tragendes Teil einen Bügel aufweist, der an der Rückenlehne angeordnet ist, führt dies zu einer einfachen und kostengünstigen Herstellung.

Vorzugsweise nimmt der Sicherheitsgurt bei Anlage an den Gurthalter letzteren im Falle eines Zuges mit. Dies wird unterstützt, wenn der Gurthalter wenigstens auf einem Teil seiner Außenfläche eine erhöhte Reibung aufweist. Bei entsprechender Zugänglichkeit der Gurthaltervorrichtung kann der Sicherheitsgurt auch in die Gurthaltervorrichtung eingebracht werden, ohne dass diese mit der Hand betätigt werden muss. Zum besseren Einlegen des Sicherheitsgurtes weist der Gurthalter an seinem freien Ende bevorzugt eine Abrundung auf.

Ein einfacheres Einklemmen erfolgt, wenn der Gurthalter in eine Schwenkrichtung federbelastet und gegenüber einem Teil der Gurthaltervorrichtung vorgespannt ist. Um den Kindersitz auf einem beliebigen Fahrzeugsitz links oder rechts befestigen zu können, weist die Gurthaltervorrichtung vorzugsweise auf der linken und auf der rechten Seite des Kindersitzes je einen Gurthalter auf.

In einer bevorzugt für ältere Kinder verwendeten zweiten Betriebsart umschließt die Gurthaltervorrichtung den Sicherheitsgurt lose. Dies wird vorteilhafterweise dadurch erreicht, dass die Gurthaltervorrichtung eine schwenkbare Nase aufweist, die bei Anlage an ein Teil der Gurthaltervorrichtung eine ringförmig geschlossene Öffnung für den Sicherheitsgurt bildet. Diese Nase kann beispielsweise am freien Ende des Gurthalters vorgesehen sein.

Eine weitere Anpassungsmöglichkeit des Kindersitzes an das wachsende Kind ergibt sich, wenn an der Rückenlehne seitliche Stützen vorgesehen sind, die in der Höhe und/oder Breite, d.h. dem Abstand zur Sitzfläche bzw. zueinander einstellbar und festlegbar sind. Solche seitlichen Stützen halten das Kind nicht nur im Falle eines seitlichen Aufpralls, sondern auch während des Schlafens. Soweit ein Bügel für die Gurthaltervorrichtung vorgesehen ist, ist dieser bevorzugt am Träger der seitlichen Stützen befestigt, kann also im Falle eine Höheneinstellbarkeit ebenfalls mit in der Höhe verschoben werden.

Für einen einfachen Transport eines unbenutzten Kindersitzes, beispielsweise im Kofferraum des Kraftfahrzeuges, ist es von Vorteil, wenn die Rückenlehne relativ zur Sitzflächenkonstruktion nach vorne klappbar ist.

Dadurch, dass die Sitzflächenkonstruktion in ihrer Neigung gegenüber dem Unterbau einstellbar ist, erfolgt eine Erhöhung des Sitzkomforts. Eine Einstellung der Neigung auf raumsparende Weise ist möglich, wenn die Sitzflächenkonstruktion bei der Einstellung der Neigung um eine sich im Raum verlagernde Drehachse geschwenkt wird. Dies lässt sich beispielsweise dadurch realisieren, dass die Sitzflächenkonstruktion Lagerbolzen aufweist, die in Kulissenführungen des Unterbaus geführt sind. Alternativ könnten auch andere Führungsteile in entsprechenden Kulissen geführt werden.

Grundsätzlich sind zahlreiche Einstellungen der Neigung möglich. Für eine einfache und trotzdem komfortable Ausbildung des Kindersitzes reicht es jedoch aus, dass die Sitzflächenkonstruktion in einer im wesentlichen aufrechten Sitzposition und einer geneigten Schlafposition sicherbar ist. Im Falle der bevorzugten Ausbildung mit Lagerbolzen kann beispielsweise die Sicherung zumindest teilweise durch Einfallen der Lagerbolzen in Rastausnehmungen der Kulissenfiihrungen erfolgen. Zusätzlich kann in der Schlaf- und/oder Sitzposition noch eine weitere Sicherung durch wenigstens eine schwenkbare Klinke erfolgen, die einen Lagerbolzen verriegelt. Die Bevorzugung der aufrechten Sitzposition aufgrund des Eigengewichts des Kindersitzes ist möglich, wenn beim Übergang von der Sitzposition in die Schlafposition die Lagerbolzen in wenigstens teilweise ansteigenden Bereichen der Kulissenführungen schräg nach oben bewegt werden, und damit auch die Sitzflächenkonstruktion angehoben wird.

Um bessere Gleiteigenschaften zu erhalten und den Verschleiss zu mindern, können die Lagerbolzen in gesondert ausgebildeten Gleitführungen als Kulisssenführung geführt werden, die in Aussparungen der Seitenwände des Unterbaus eingesetzt sind. Die Gleitführungen bestehen dann vorzugsweise aus einem härteren Material als die Seitenwände.

Der erfindungsgemäße Kindersitz kann als Anpassungsmöglichkeit an das wachsende Kind und zur Erhöhungen der Sicherheit und des Komforts ausser eine längenveränderliche Sitzfläche sowohl eine veränderliche Neigung als auch einen Gurthalter und höhen-/breiteneinstellbare seitliche Stützen aufweisen. Er kann aber auch nur mit einer dieser Möglichkeiten oder einer beliebigen Kombination zweier Möglichkeiten ausgestattet sein.

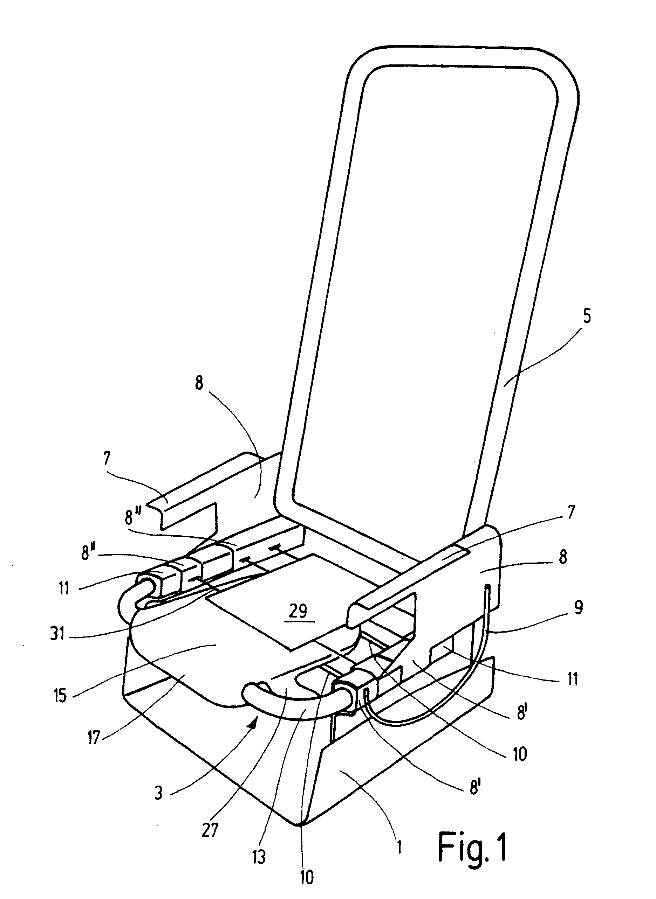

Im folgenden ist die Erfindung anhand dreier in der Zeichnung dargestellten Ausführungsbeispiele näher erläutert. Es zeigen
- Fig. 1: eine perspektivische Ansicht eines ersten erfindungsgemäßen Kindersitzes ohne Polsterung und Bezug,

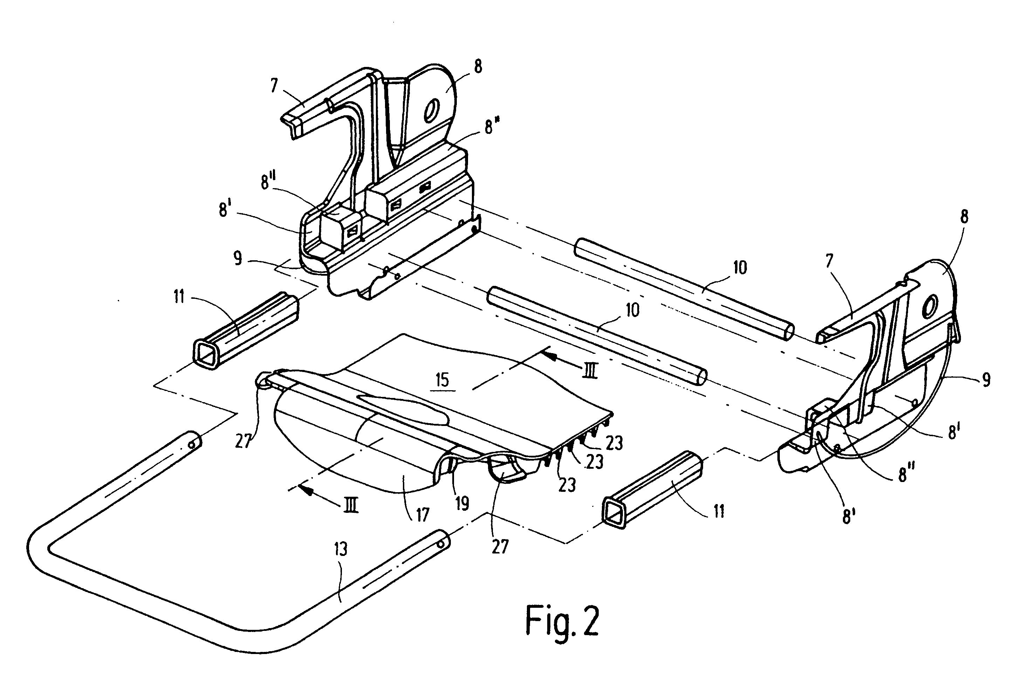

- Fig. 2: eine perspektivische Ansicht verschiedener Bestandteile einer Sitzflächenkonstruktion dieses ersten Kindersitzes,

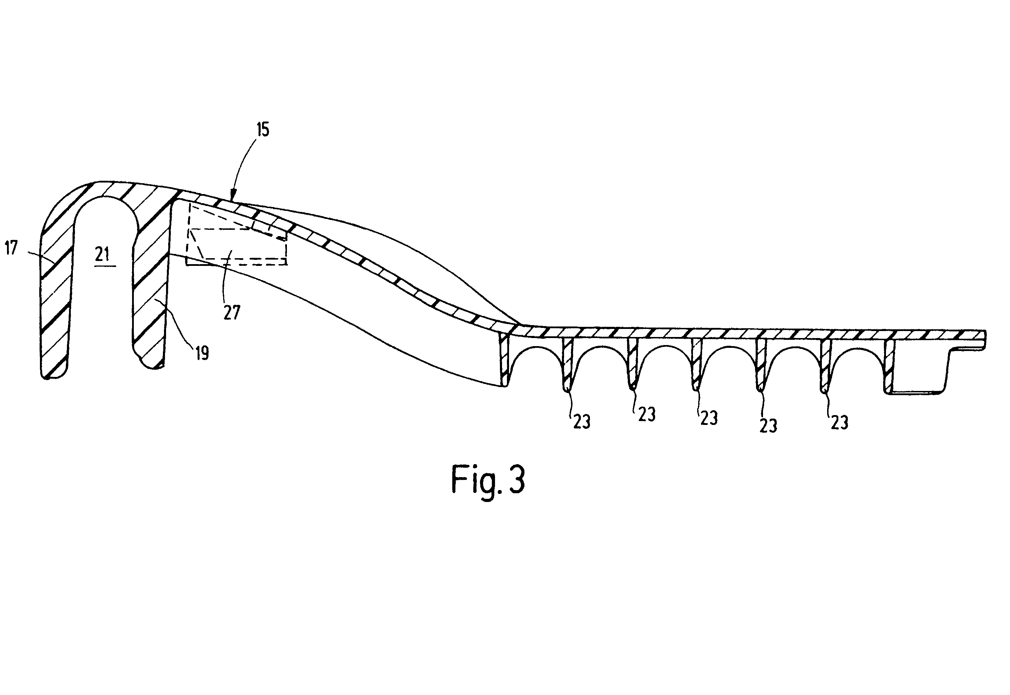

- Fig. 3: einen Schnitt durch eine Rampe nach der Linie III-III in Fig. 2,

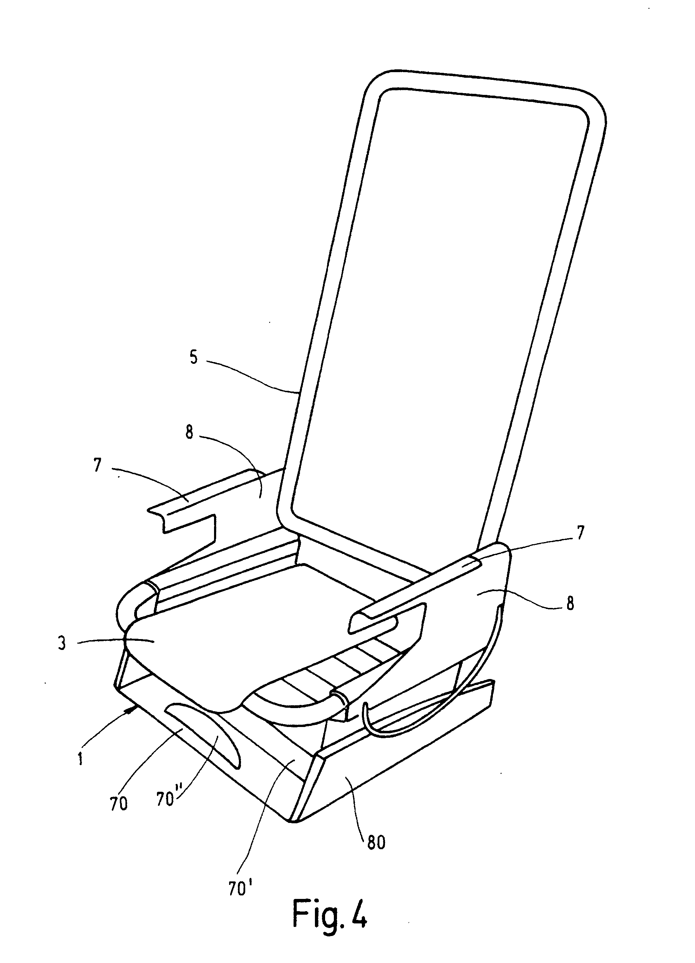

- Fig. 4: eine perspektivische Ansicht eines zweiten erfindungsgemäßen Kindersitzes ohne Polsterung und Bezug,

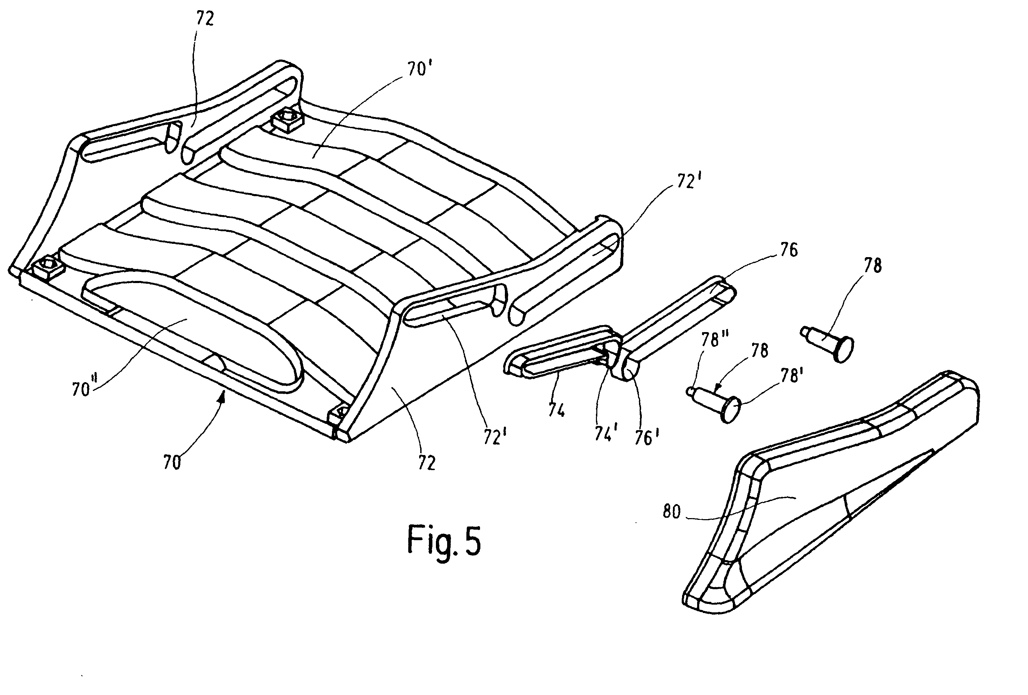

- Fig. 5: eine perspektivische Ansicht verschiedener Bestandteile eines Unterbaus dieses zweiten Kindersitzes,

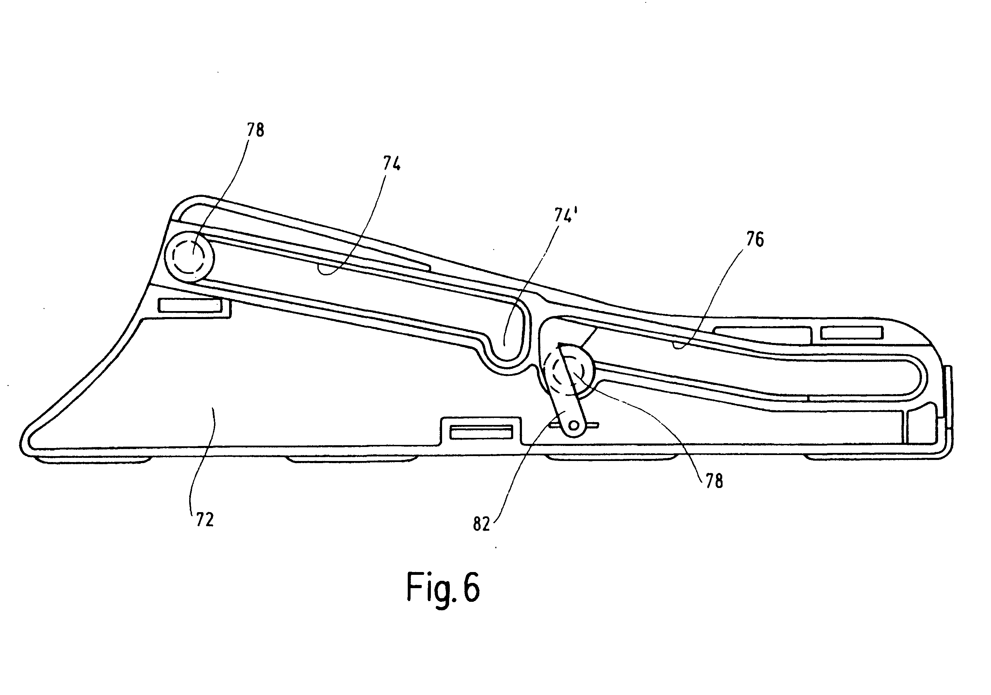

- Fig. 6: eine Seitenansicht der linken Seitenwand des Unterbaus dieses zweiten Kindersitzes ohne Blende,

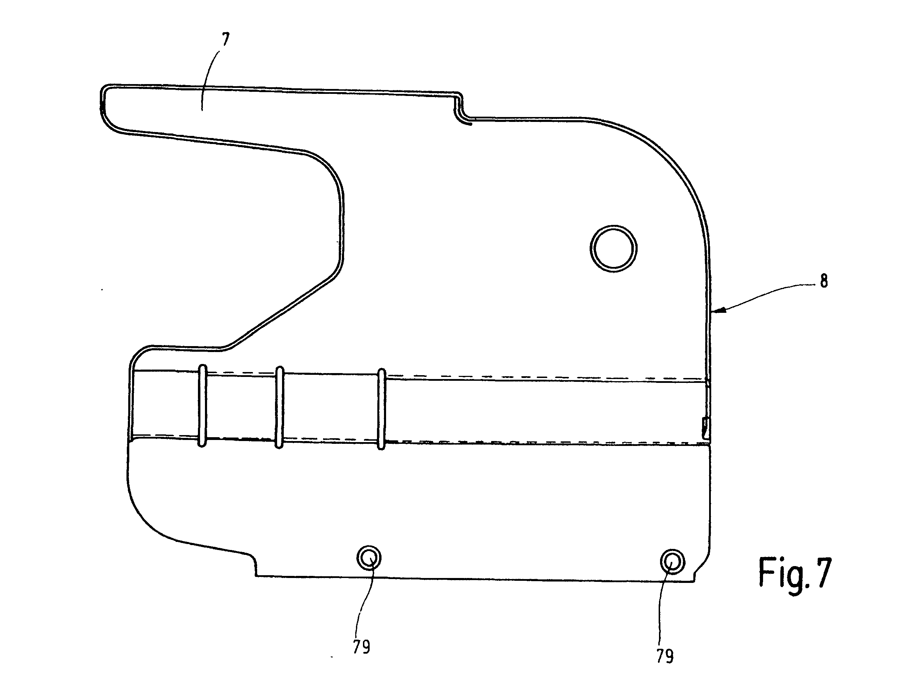

- Fig. 7: eine Seitenansicht des linken Seitenteils der Sitzflächenkonstruktion dieses zweiten Kindersitzes,

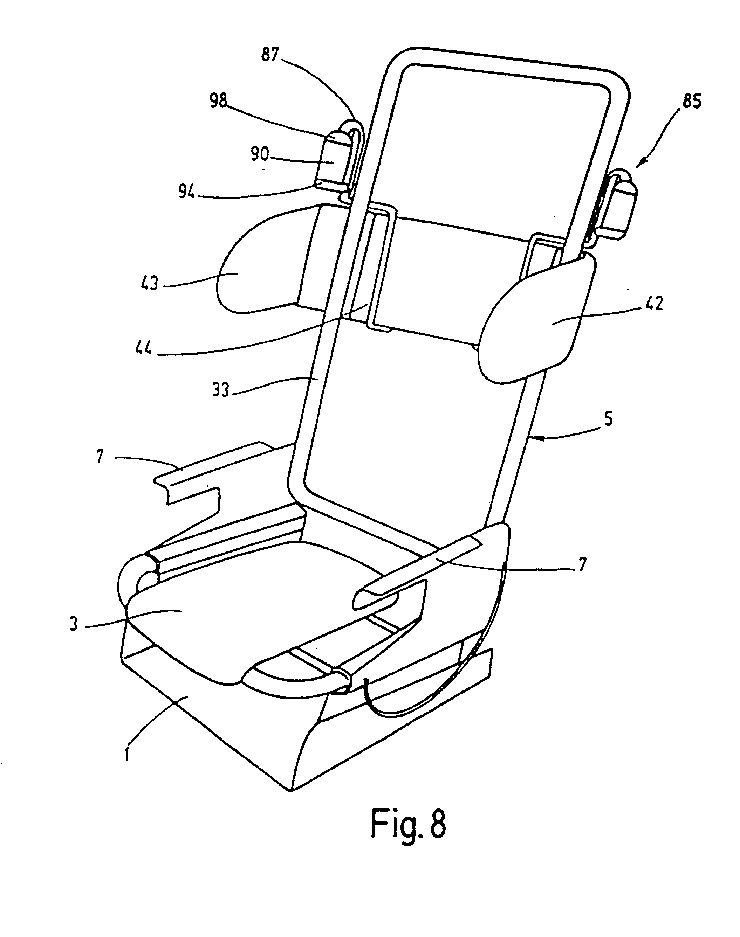

- Fig. 8: eine perspektivische Ansicht eines dritten erfindungsgemäßen Kindersitzes ohne Polsterung und Bezug,

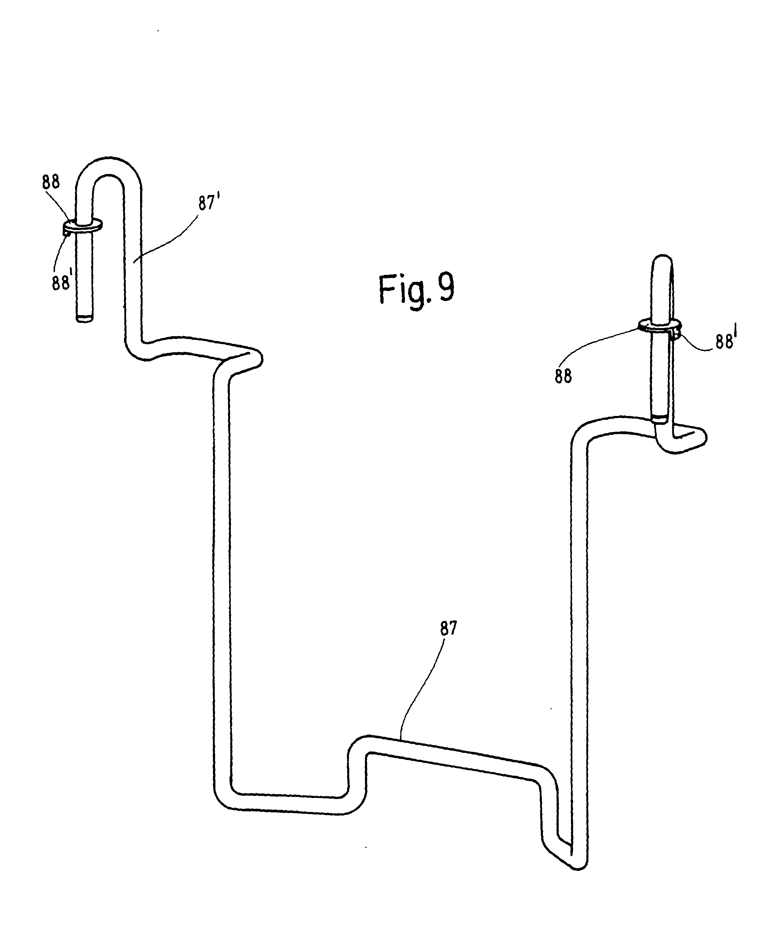

- Fig. 9: eine perspektivische Ansicht eines Bügels der Gurthaltervorrichtung dieses dritten Kindersitzes,

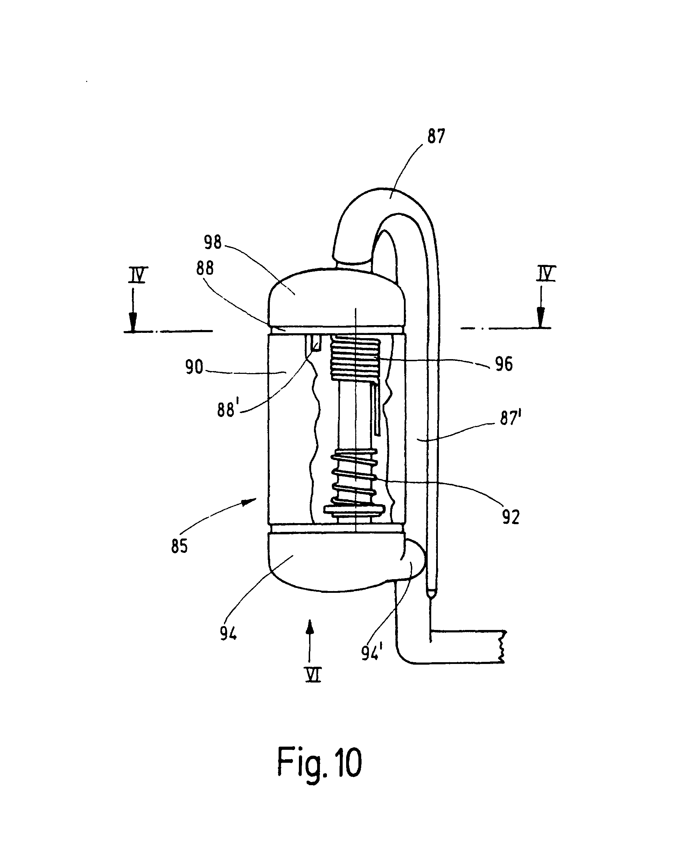

- Fig. 10: eine teilweise geschnittene Ansicht eines Gurthalters dieses dritten Kindersitzes mit Kappen, Federn und Bügel,

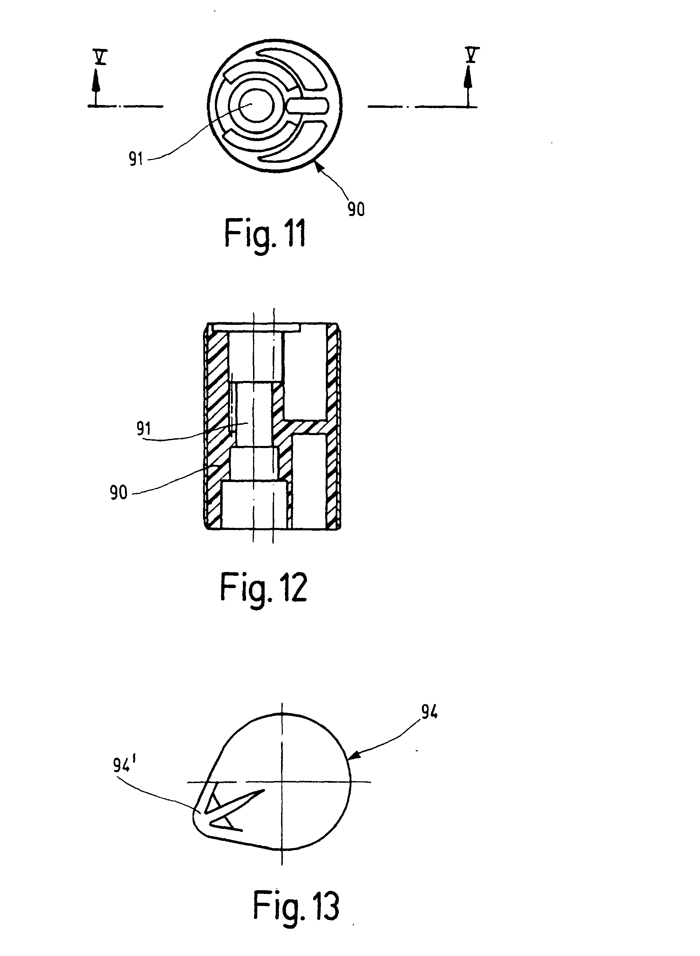

- Fig. 11: eine Draufsicht auf den Gurthalter in Richtung des Pfeiles IV in Fig. 10,
- Fig. 12: einen Schnitt durch den Gurthalter entlang der Linie V-V in Fig. 11,
- Fig. 13: eine Draufsicht auf die untere Kappe in Richtung des Pfeiles VI in Fig. 10.

Ein Kindersitz ist im eingebauten Zustand auf einer Rücksitzbank eines Kraftfahrzeuges befestigt. Alle nachfolgenden Richtungsangaben sind von der Fahrtrichtung des Kraftfahrzeuges, in welchem der Kindersitz eingebaut ist, und dessen normaler Ausrichtung abgeleitet.

Im ersten Ausführungsbeispiel weist der Kindersitz einen Unterbau 1 auf, mit dem der Kindersitz sich auf der Sitzfläche der Rücksitzbank abstützt. Auf dem Unterbau 1 ist eine Sitzflächenkonstruktion 3 angeordnet. Der Träger einer Rückenlehne 5 ist auf der Sitzflächenkonstruktion 3 angeordnet, könnte aber auch auf dem Unterbau 1 angeordnet sein. Links und rechts der Sitzflächenkonstruktion 3 sind Armlehnen 7 angeordnet, die vorzugsweise mit der Sitzflächenkonstruktion 3 verbunden sind. Die Oberseite der Sitzflächenkonstruktion 3, die Vorderseite der Rückenlehne 5 und die Ober- und Innenseiten der Armlehen 7 sind gepolstert, was in der Zeichnung nicht dargestellt ist. Die genannten Teile sind außerdem mit ebenfalls nicht dargestellt Stoffbezügen überzogen.

Die Sitzflächenkonstruktion 3 weist links und rechts je ein Seitenteil 8 auf, das vorzugsweise als metallisches Stanzbiegeteil hergestellt ist. Die beiden Seitenteile 8 sind spiegelbildlich ausgebildet und über zwei Quertraversen 10 miteinander zu einem Sitzrahmen verbunden. Die zwei Quertraversen 10 sind vorzugsweise als zylindrische Rohre ausgebildet und im unteren Bereich der Seitenteile 8 angebracht, vorzugsweise angeschraubt oder angeschweißt. Für ein leichteres Anbringen ist der untere Rand des Seitenteils 8 nach innen und dann nach oben gebogen und mit zwei Auskerbungen versehen, in die beim Zusammenbau die Quertraversen 10 eingelegt werden. Der obere, nach vorne vorgezogene und teilweise nach außen gebogene Bereich jedes Seitenteils 8 bildet zugleich den Träger der Armlehne 7. Auf der Außenseite ist jedes Seitenteil 8 im unteren Bereich mit einem U-förmig gebogenen, nach unten weisenden Rohr 9 versehen, um das herum der Bezug der Armlehne 7 unten abgespannt wird.

Etwas unterhalb der Mitte des Seitenteils 8 ist dieses mit einem in Längsrichtung verlaufenden, nach innen weisenden Absatz versehen. Der Absatz wird dabei durch zwei Teile 8' des Seitenteils 8 gebildet, die zunächst nach unten, dann im rechten Winkel nach innen und dann wieder im rechten Winkel nach unten verlaufen, sowie damit abschnittsweise abwechselnd durch zwei weitere Teile 8" des Seitenteils 8, die zunächst im rechten Winkel nach innen und dann im rechten Winkel nach unten verlaufen. Die unterschiedlich herausgebogenen Teile 8' und 8" schließen dabei einen zu unterschiedlichen Seiten hin geöffneten Kanal mit nahezu quadratischem Querschnitt ein.

In diesen Kanal ist eine vorne und hinten offene Führungsbuchse 11, vorzugsweise aus Kunststoff, eingeschoben, die um ihre vordere Öffnung herum einen Wulst aufweist, welcher beim Einschieben der Führungsbuchse 11 in den Kanal als Anschlag für das vordere Teil 8' des Seitenteils 8 dient. Die Führungsbuchse 11 weist ferner auf der Unterseite eine Nase auf, mit der sie nach dem Einschieben das hintere Teil 8' des Seitenteils 8 hintergreift und so gegen ein Verschieben gesichert ist. Ein U-förmiger, aus einem Rohr, vorzugsweise einem Aluminiumrohr, gebogener Bügel 13 ist mit je einem Schenkel von vorne in eine Führungsbuchse 11 eingeführt, wobei die über die Führungsbuschen 11 hinten hinausstehenden Enden der Schenkel durch je einen eingesetzten Stopfen mit Rastnasen daran gehindert werden, wieder durch die Führungsbuchsen 11 nach vorne gezogen zu werden.

Eine Rampe 15, vorzugsweise aus Kunststoff, die von hinten nach vorne leicht ansteigt, ist spiegelsymmetrisch zur Längsrichtung ausgebildet. Auf der Oberseite weist die Rampe etwa in der Mitte einen Höcker auf, der später zwischen den Beinen des Kindes zu liegen kommt. Die Rampe 15 ist am vorderen Ende mit einer nach unten abgebogenen und in Querrichtung verlaufenden Griffpartie 17 versehen. Die hintere Seite der Griffpartie 17 und eine parallel zu dieser verlaufende, von der Unterseite der Rampe 15 nach unten abstehende Einzelrippe 19 bilden eine nahezu ein U-Profil aufweisende, nach unten offene Aufnahme 21. Die Rampe 15 ist mit der Aufnahme 21 auf den quer verlaufenden Teil des Bügels 13 aufgesetzt, wobei dieser Teil des Bügels 13 von der Griffpartie 17 und der Einzelrippe 19 leicht hintergriffen wird in der Art einer Clip-Verbindung.

In ihrem hinteren Bereich weist die Rampe 15 auf der Unterseite mehrere parallele Rippen 23 auf, zwischen denen jeweils nach unten offene Rillen mit halbkreisförmigem Profil definiert sind. Die Rampe 15 ist diesem hinteren Bereich in die vordere, zwischen den beiden Seitenteilen 8 verlaufende Quertraverse 10 derart eingehängt, daß die Quertraverse 10 zwischen zwei Rippen 23 zu liegen kommt. Dadurch wirkt die Rampe 15 als Festlegevorrichtung, welche den Bügel 13 relativ zu den feststehenden Teilen der Sitzflächenkonstruktion 3, insbesondere den Seitenteilen 8, lösbar festlegt. Die hintere Quertraverse 10 kann je nach Anordnung der Rampe 15 ebenfalls zwischen zwei Rippen 23 zu liegen kommen.

Im vorderen Bereich der Rampe 15 weist diese auf der linken und der rechten Seite zwei spiegelbildliche, einstückig mit ihr ausgebildete Laschen 27 auf, die J-förmig von der Rampe 15 erst nach unten verlaufen und dann nach außen gebogen sind. Die Laschen 27 sind mit ihren Enden unterhalb der nach hinten verlaufenden Teile des Bügels 13 angeordnet. Solange die Rampe 15 auf der Quertraverse 10 aufliegt, liegen die Laschen 27 mit einer leichten Vorspannung am Bügel 13 an.

Eine Matte 29 ist in der Mitte der Sitzflächenkonstruktion 3 oberhalb der Rampe 15 angeordnet. Die Matte 29 besteht aus miteinander verbundenen Gummi- und Textilteilen und ist seitlich mit je drei Klammern 31 an den Seitenteilen 8 unter Vorspannung befestigt. Die Seitenteile 8 weisen für die Befestigung in den nach unten verlaufenden Bereichen der Teile 8" herausgebogene Ösen für die Klammern 31 auf, und zwar im vorderen Teil 8" eine Öse und im hinteren Teil 8" zwei Ösen.

Die Matte 29 trägt zusammen mit dem vorderen Teil der Rampe 15 die Polsterung für die Sitzfläche, definiert also zusammen mit den Seitenteilen 8 und dem Bügel 13 die Sitzfläche. Der Bezug für die Sitzfläche ist hinter dem hinteren Ende der Matte 29 befestigt, beispielsweise an der hinteren Quertraverse 10, verläuft nach vorne, über die Griffpartie 17 nach unten, ist dann durch Gummizüge ersetzt, die schließlich über textile Haftverschlüsse wieder am hinteren Ende des Bezug befestigt sind.

Zur Veränderung der Länge der Sitzfläche löst der Bediener den Bezug, greift an die Griffpartie 17 und schwenkt die Rampe 15 um den Bügel 13 als Achse etwas nach oben, wobei die Aufnahme 21 das Lager für den Bügel 13 während der Schwenkbewegung bildet. Die Schwenkbewegung wird dadurch begrenzt, daß das hintere Ende der Rampe 15 in Anlage an die Unterseite der Matte 29 kommt. Ein versehentliches Abheben der Rampe 15 vom Bügel 13 wird durch die seitlichen Laschen 27 verhindert, die unter Vorspannung am Bügel 13 anliegen. Mit dem Hochschwenken der Rampe 15 lösen sich die Rippen 23 von der Quertraverse 10.

Wenn die Rampe 15 hochgeschwenkt ist, kann der Bügel 13 innerhalb der Führungsbuchsen 11 bewegt werden. Die Sitzlänge ergibt sich aus der Lage des Bügels 13 in Längsrichtung relativ zu den übrigen Teilen der Sitzflächenkonstruktion 3. Ist die gewünschte Sitzlänge erreicht, schwenkt der Benutzer die Rampe 15 wieder herunter, bis die Quertraverse 10 wieder zwischen zwei Rippen 23 gelangt, und damit die Rampe 15 wieder am hinteren Ende abgestützt ist. Anschließend wird der Bezug wieder straff gespannt und befestigt.

Ein versehentliches Hochschwenken der Rampe 15 während des Gebrauchs des Kindersitzes wird dadurch verhindert, daß die Matte 29 bei Gebrauch nach unten gedrückt wird, im Extremfall bis zur Rampe 15 hinunter, so daß der Rampe 15 kein Raum für eine Schwenkbewegung zur Verfügung steht, und ferner dadurch, daß die Laschen 27 am Bügel anliegen.

Im zweiten Ausführungsbeispiel weist der Kindersitz einen Unterbau 1 auf, mit dem der Kindersitz sich auf der Sitzfläche der Rücksitzbank abstützt. Auf dem Unterbau 1 ist eine Sitzflächenkonstruktion 3 angeordnet. Der Träger einer Rückenlehne 5 ist auf der Sitzflächenkonstruktion 3 angeordnet, könnte aber auch auf dem Unterbau 1 angeordnet sein. Links und rechts der Sitzflächenkonstruktion 3 sind Armlehnen 7 angeordnet, die vorzugsweise mit der Sitzflächenkonstruktion 3 verbunden sind, beispielsweise über Seitenteile 8. Die Oberseite der Sitzflächenkonstruktion 3. die Vorderseite der Rückenlehne 5 und die Ober- und Innenseiten der Armlehnen 7 sind gepolstert, was in der Zeichnung nicht dargestellt ist. Die genannten Teile sind außerdem mit ebenfalls nicht dargestellten Stoffbezügen überzogen.

Der Unterbau 1 umfaßt eine nahezu quadratische Bodenplatte 70, die links und rechts jeweils mit einer einstückig mit der Bodenplatte 70 ausgebildeten, nach oben gezogenen Seitenwand 72 versehen ist. Die Bodenplatte 70 mit den Seitenwänden 72 besteht vorzugsweise aus Kunststoff. Die Bodenplatte 70 ist aus Stabilitätsgründen auf der Oberseite mit drei flachen, quer verlaufenden Rippen 70' versehen, auf deren Unterseite die Bodenplatte 70 entsprechende Vertiefungen aufweist. Im vorderen Randbereich ist in der Bodenplatte 70 eine Grifföffnung 70" ausgespart, die zum Ergreifen des Kindersitzes dient.

Der obere Rand jeder Seitenwand 72 verläuft im hinteren Viertel etwa horizontal, steigt dann in einem Winkel von etwa 15° nach vorne an und fällt dann rasch auf etwa einem Sechstel der Länge der Seitenwand 72 bis zur Bodenplatte 70 ab. In der Nähe des oberen Randes weist die Seitenwand 72 zwei die Seitenwand 72 in Querrichtung durchdringende, in Längsrichtung verlaufende und dabei leicht ansteigende Aussparungen 72' auf.

In der vorderen dieser Aussparungen 72' ist eine vordere Gleitführung 74 aus Kunststoff eingesetzt, die in der Art einer aus einem geschlossenen Band konstanter Breite gebildeten Form ausgebildet ist und auf dem nach innen weisenden Rand einen Wulst oder Absatz als Anschlag zum Einsetzen in die Aussparung 72' aufweist. Im eingebauten Zustand weist die vordere Gleitführung 74 einen länglichen, im Winkel von etwa 10° nach vorne ansteigenden Teil mit parallelen Wänden oben und unten auf, der vorne mit einem in gleicher Richtung weisenden, halbzylindrisch ausgerundeten Endabschnitt versehen ist. Am hinteren Ende ist die vordere Gleitführung 74 mit einer vom länglichen Teil weg nach unten weisenden, etwa halbzylindrisch ausgerundeten Rastausnehmung 74' versehen.

In der hinteren dieser Aussparungen 72' ist eine hintere Gleitführung 76 eingesetzt, die in der gleichen Art wie die vordere Gleitführung 74 und ebenfalls aus Kunststoff ausgebildet ist. Im eingebauten Zustand weist die hintere Gleitführung 76 einen länglichen Teil mit parallelen Wänden oben und unten auf, der hinten mit einem horizontal nach hinten weisenden, halbzylindrisch ausgerundeten Endabschnitt versehen ist, im hinteren Drittel nahezu waagrecht verläuft und dann nach vorne hin mit einem Winkel von etwa 15° ansteigt. Am vorderen Ende ist die hintere Gleitführung 76 mit einer vom länglichen Teil weg nach unten weisenden, etwa halbzylindrisch ausgerundeten Rastausnehmung 76' versehen.

Vier im wesentlichen zylindrische Lagerbolzen 78 sind an einem Ende mit einem flachen, scheibenförmigen Kopf 78' von größerem Durchmesser und am anderen Ende mit einem koaxialen Zapfen 78" von geringerem Durchmesser als der übrige Lagerbolzen 78 versehen. Die horizontalen Lagerbolzen 78 sind so durch die Gleitführungen 74 und 76 gesteckt, daß der Kopf 78' auf der Außenseite der Seitenwand 72 angeordnet ist und dadurch den zugehörigen Lagerbolzen 78 zu einer Seite hin in der Gleitführung 74 oder 76 hält. Mit den Zapfen 78" sind die Lagerbolzen 78 in Bohrungen 79 der Seitenteile 8 eingepaßt oder, soweit sie ein Gewinde tragen, eingeschraubt und dadurch zur anderen Seite hin abgesichert. Die Seitenteile 8 bilden tragende Teile des Sitzrahmens und zugleich der Sitzflächenkonstruktion 3. Die Außenfläche jeder Seitenwand 72 wird durch eine passend ausgebildete Blende 80 aus Kunststoff abgedeckt, die vorzugsweise über eine Clip-Verbindung an der Seitenwand 72 befestigt ist.

Die oberen Teile des Kindersitzes, also der Sitzrahmen mit der Sitzflächenkonstruktion 3 und die Rückenlehne 5, können gegenüber dem Unterbau 1 in ihrer Neigung verändert werden. In einer im wesentlichen aufrechten Sitzposition des Kindersitzes befinden sich die Lagerbolzen 78 an den rückwärtigen Enden der als Kulissenführungen ausgebildeten Gleitführungen 74 und 76. wobei die vorderen Lagerbolzen 78 in den Rastausnehmung 74' der vorderen Gleitführungen 74 angeordnet sind und dadurch die Sitzposition gesichert ist, unterstützt durch das Eigengewicht des Kindersitzes.

Hiervon ausgehend wird der Kindersitz an der Sitzflächenkonstruktion 3 ergriffen und nach vorne und leicht nach oben gezogen. Die an den Seitenteilen 8 der Sitzflächenkonstruktion 3 befestigten vorderen Lagerbolzen 78 bewegen sich aus den Rastausnehmungen 74' heraus und in der als Rampe wirkenden, vorderen Gleitführung 74 schräg nach oben. Gleichzeitig bewegen sich die hinteren Lagerbolzen 78 entlang der hinteren Gleitführung 76 nach vorne und leicht nach oben. Die Änderung der Neigung ist keine Schwenkbewegung um eine ortsfeste Drehachse, sondern eine gedachte Schwenkbewegung um eine gedachte, horizontale, quer verlaufende Drehachse, die sich während der Änderung der Neigung nach unten und leicht nach vorne verlagert, so daß der Kindersitz für die Änderung der Neigung nicht von der Rücksitzbank entfernt werden muß. Sobald die Lagerbolzen 78 an den vorderen Enden der Lagerführungen 74 und 76 angelangt sind, kann der hintere Lagerbolzen 78 aufgrund des Eigengewicht des Kindersitzes in die hintere Rastausnehmung 76' einfallen. Damit ist die Schlafposition erreicht.

Um die Schlafposition zusätzlich zu sichern, ist eine Klinke 82 vorgesehen, beispielsweise auf der linken Seite des Unterbaus 1, die um eine horizontale, parallel zu den Lagerbolzen 78 und unterhalb der hinteren Rastausnehmung 76' verlaufende Drehachse schwenkbar ist. Die Klinke 82 ist in der Seitenwand 72 gelagert, zwischen dieser und der Blende 80 angeordnet und nach hinten geöffnet. Die Abmessungen der Klinke 82 sind so gewählt, daß sie den Kopf 78' des linken hinteren Lagerbolzens 78 von oben her geringfügig umgreifen kann, wenn er in der hinteren Rastausnehmung 76' liegt, und damit verriegelt. Die Klinke 82 kann zur sichernden Stellung hin federbelastet sein und durch einen Hebel oder einen Bowden-Zug aufgedrückt oder -gezogen werden. Sie kann auch so ausgelegt sein, daß sie beim Ergreifen der Sitzflächenkonstruktion 3 zum Übergang in die Sitzposition gleichzeitig zurückgeschwenkt wird.

Eine entsprechende Klinke kann zur zusätzlichen Sicherung der Sitzposition vorgesehen sein, um beispielsweise auf der gegenüberliegenden Seite des Kindersitzes den rechten vorderen Lagerbolzen 78 bei Einfall in die vordere Rastausnehmung 74' zu verriegeln.

Im dritten Ausführungsbeispiel weist der Kindersitz einen Unterbau 1 auf, mit dem der Kindersitz sich auf der Sitzfläche der Rücksitzbank abstützt. Auf dem Unterbau 1 ist eine Sitzflächenkonstruktion 3 angeordnet. Der Träger einer Rückenlehne 5 ist auf der Sitzflächenkonstruktion 3 angeordnet, könnte aber auch auf dem Unterbau 1 angeordnet sein. Links und rechts der Sitzflächenkonstruktion 3 sind Armlehnen 7 angeordnet, die vorzugsweise mit der Sitzflächenkonstruktion 3 verbunden sind, beispielsweise über Seitenteile 8. Die Oberseite der Sitzflächenkonstruktion 3, die Vorderseite der Rückenlehne 5 und die Ober- und Innenseiten der Armlehnen 7 sind gepolstert, was in der Zeichnung nicht dargestellt ist. Die genannten Teile sind außerdem mit ebenfalls nicht dargestellten Stoffbezügen überzogen.

An der Rückenlehne 5 ist eine Gurthaltervorrichtung 85 angeordnet. Die Gurthaltervorrichtung 85 weist einen Bügel 87 auf, der beispielsweise aus einem Stahlrohr von 8mm Durchmesser mit 1 mm Wandstärke besteht. Der Bügel 87 ist an einem Träger 44 für seitliche Stützen 42, 43 des Kindersitzes befestigt, wobei der Träger 44 wiederum relativ zur Rückenlehne 5 verschiebbar und an dieser festlegbar ist. Der Bügel 87 ist links und rechts spiegelsymmetrisch gebogen. Von der Mitte aus verläuft der Bügel 87 zunächst quer zum Kindersitz, dann nach unten, schräg nach vorne und wieder nach oben, um eine Aufnahme für den Träger 44 zu bilden. Nach etwa zwei Dritteln seiner Höhe verläuft der Bügel 87 nach hinten, nach außen und wieder nach vorne, um einen Lehnenholm 33 der Rückenlehne 5 zu umrunden. Dann verläuft der Bügel 87 nach oben in einem Abschnitt 87', biegt um mit Ausrichtung nach schräg vorne und verläuft dann in einem Endabschnitt wieder nach unten, um vor dem den Lehnenholm 33 umrundenden Abschnitt zu enden. Etwas oberhalb seiner beiden Enden ist auf den Bügel 87 ein kleiner Teller 88 aufgeschoben und befestigt, vorzugsweise angeschweißt, der zur Außenseite des Sitzes hin einen nach unten weisenden Zahn 88' trägt.

Als weiteres Teil der Gurthaltervorrichtung 85 ist je ein Gurthalter 90 von zylindrischen Gestalt auf die Endabschnitte des Bügels 87 von unten her aufgeschoben und durch ein später beschriebenen Federmechanismus gesichert. Jeder Endabschnitt des Bügel 87 wird dabei von einer Aufnahme 91 des Gurthalters 90 umschlossen und lagert zumindest auf einem Teil seiner Länge den Gurthalter 90. Dabei verläuft die Aufnahme 91 zwischen den beiden Stirnflächen sowie parallel zur Mittelachse des Gurthalters 90. so daß also der Gurthalter 90 exzentrisch gelagert ist. Der Gurthalter 90 trägt auf der Außenseite seiner Mantelfläche eine Gummibeschichtung zur Erhöhung der Reibung und besteht ansonsten aus Kunststoff.

Von der unteren Stirnseite des Gurthalters 90 her ist eine untere Feder 92 in die Aufnahme 91 eingeführt, um den Bügel 87 herum gewickelt und an ihrem oberen Ende an einem Absatz der Aufnahme 91 abgestützt. Das untere Ende der unteren Feder 92 ist am Bügel 87 abgestützt, beispielsweise an einem Sprengring, der in einer Ringnut am Ende des Bügels 87 sitzt. Die untere Feder 92 ist in axialer Richtung vorgespannt, sichert so den Gurthalter 90 nach unten ab und drückt ihn gegen den Teller 88.

Eine untere Kappe 94 mit im wesentlichen der Grundform einer halben Linse ist auf der ebenen Seite mit drei stiftartigen Domen versehen, die in entsprechende Sacklöcher oder andere Ausnehmungen an der unteren Stirnseite des Gurthalters 90 unter Reibschluß eingeführt sind. Dadurch ist die untere Stirnseite des Gurthalters 90 abgedeckt. Die untere Kappe 94 bildet zugleich das freie Ende des Gurthalters 90. Seitlich trägt die untere Kappe 94 eine Nase 94', die von der Mittelachse des Gurthalters 90 aus gesehen um etwa 30° in Umfangsrichtung gegenüber der Aufnahme 91 versetzt ist.

Von der oberen Stirnseite des Gurthalters 90 her ist eine obere Feder 96 in die Aufnahme 91 eingeführt, um den Bügel 87 herum gewickelt und an ihrem unteren Ende in einer Längsnut in der Aufnahme 91 abgestützt. Das obere Ende der oberen Feder 96 ist am Bügel 87 abgestützt, vorzugsweise am Teller 88 oder dessen Zahn 88'. Die obere Feder 96 ist in Umfangsrichtung vorgespannt und versucht so, den Gurthalter 90 um den Bügel 87 zu schwenken. Der Abstand zwischen der Aufnahme 91 und der am weitesten davon entfernten parallelen Linie auf der Außenseite des Gurthalters 90 ist größer als der Abstand zwischen dem Endabschnitt des Bügels 87 und dem davor gelegenen Abschnitt 87' des Bügels 87. Der Gurthalter 90 kann daher aufgrund der Exzentrizität nicht über den gesamten Winkelbereich geschwenkt werden, und die obere Feder 96 versucht, den Gurthalter 90 in Anlage an den Abschnitt 87' des Bügels 87 zu bringen, und zwar von der Hinterseite des Kindersitzes her nach innen.

Eine obere Kappe 98 mit ebenfalls einer halben Linse als Grundform ist auf den Teller 88 und die obere Stirnseite des Gurthalters 90 gesetzt und mit zwei in den Gurthalter 90 gesteckten Dornen befestigt. Die aus Kunststoff gefertigte obere Kappe 98 ist seitlich geschlitzt und umschließt dabei den Bügel 87.

Die Gurthaltervorrichtung 85 ist in zwei unterschiedlichen Betriebsarten einsetzbar. In der einen Betriebsart wird die eben beschriebene Wirkung der oberen Feder 96 und die Exzentrizität ausgenutzt. Insbesondere für kleinere Kinder wird dabei der normale Dreipunkt-Sicherheitsgurt der Rücksitzbank auf der passenden Seite des Kindersitzes von vorne her an die untere Kappe 94 herangeführt mit leichtem Zug nach hinten und nach oben. Aufgrund der Abrundung der Kappe 94 rutscht der Sicherheitsgurt an den Gurthalter 90 heran, bleibt an seiner Gummibeschichtung hängen und nimmt den Gurthalter 90 entgegen der Kraft der oberen Feder 96 mit. Der Gurthalter 90 löst sich so von dem Abschnitt 87' des Bügels 87, so daß sich ein Spalt dazwischen öffnet, in den der Sicherheitsgurt gleitet. Wird der Sicherheitsgurt losgelassen, sorgt die Kraft der oberen Feder 96 dafür, daß der Gurthalter 90 wieder zurückschwenkt und den Sicherheitsgurt festklemmt. Bewegt sich das Kind nach vorne, zieht also den Gurt nach vorne, so verstärkt sich die Klemmwirkung, so daß das Kind sicher im Kindersitz gehalten wird. Das Einlegen des Sicherheitsgurtes kann mit einer Hand allein erfolgen, ohne daß der Gurthalter 90 mit der anderen Hand ergriffen werden muß.

In der anderen Betriebsart wird die Nase 94' ausgenutzt. Insbesondere für ältere Kinder mit mehr Bewegungsbedürfnis wird zunächst der Sicherheitsgurt, wie eben beschrieben, zwischen den Gurthalter 90 und den Abschnitt 87' des Bügels 87 gebracht. Dann wird der Gurthalter 90 entgegen der Kraft der unteren Feder 92 etwas nach unten gezogen und so lange geschwenkt, bis die Nase 94' in Anlage mit dem Abschnitt 87' des Bügels 87 kommt. Aufgrund der Exzentrizität besteht dann zwischen dem Gurthalter 90 und dem Abschnitt 87' des Bügels 87 ein Spalt, in dem sich der Sicherheitsgurt befindet. Der Spalt ist dann oben und unten geschlossen, aber seitlich geöffnet, so daß der Sicherheitsgurt in dieser dadurch gebildeten Öffnung ringförmig und lose vom Bügel 87, dem Gurthalter 90 und der unteren Kappe 94 mit der Nase 94' umschlossen wird. Der Gurthalter 90 wird dann so weit losgelassen, daß die untere Feder 92 ihn nach oben drücken kann. Dabei greift der Zahn 88' des Tellers 88 in eine Ausnehmung auf der oberen Stirnseite des Gurthalters 90 ein. Dadurch wird eine mögliche, durch die Kraft der oberen Feder 96 bewirkte Schwenkbewegung des Gurthalters 90 verhindert. Der lose eingelegte Sicherheitsgurt wird durch die Nase 94' daran gehindert, nach unten zu gleiten und aus der Gurthaltervorrichtung 85 heraus zu rutschen. Das Kind, kann sich aber bequem bewegen. Andererseits behindert die Gurthaltervorrichtung 85 in keiner Weise den Sicherheitsgurt im Falle einer Beanspruchung, beispielsweise bei einem Crash.

Durch erneutes Ziehen des Gurthalters 90 nach unten kann der Zahn 88' wieder außer Eingriff mit dem Gurthalter 90 gebracht werden, so daß wieder die obere Feder 96 wirksam wird und wieder zur ersten Betriebsart übergegangen werden kann.

In einer abgewandelten Ausführungsform kann aufgrund des Materials und der Form des Bügels 87 der Endabschnitt des Bügels 87 in geringem Umfang elastisch aufgebogen werden. Beim Übergang in die zweite Betriebsart kann so der Gurthalter 90 etwas vom Abschnitt 87' des Bügels 87 weggebogen werden. Die Nase 94' kann dann an diesem Abschnitt 87' vorbeigeführt werden, so daß beim Loslassen des Gurthalters 90 die Nase 94' auf der Rückseite des Abschnittes 87' in Anlage mit diesem Abschnitt 87' kommt und von der oberen Feder 96 in dieser Stellung gehalten wird. Die untere Feder 92 und der Zahn 88' entfallen bei dieser Abwandlung.

## Patentansprüche

1. Kindersitz, insbesondere für ein Kraftfahrzeug, mit einer Rückenlehne (5), einer die Sitzfläche definierenden Sitzflächenkonstruktion (3), von welcher ein Teil (13) gegenüber den übrigen, die Sitzfläche definierenden Teilen (8, 29) der Sitzflächenkonstruktion (3) in Längsrichtung einstellbar und festlegbar ist, und einer im Bereich der Sitzfläche vorgesehenen Festlegevorrichtung (15), welche den einstellbaren Teil (13) der Sitzflächenkonstruktion (3) relativ zu den übrigen Teilen (8, 10) derselben lösbar festlegt, **dadurch gekennzeichnet, dass** die Festlegevorrichtung (15) selber wenigstens einen Teil der Sitzfläche definiert.

2. Kindersitz nach Anspruch 1, **dadurch gekennzeichnet, dass** der einstellbare Teil der Sitzflächenkonstruktion (3) als Bügel (13) ausgebildet ist, welcher von Führungsbuchsen (11) geführt innerhalb eines Wegbereiches verfahrbar ist.

3. Kindersitz nach Anspruch 2, **dadurch gekennzeichnet, dass** die Festlegevorrichtung (15) den Bügel (13) mit wenigstens einer zwischen zwei Seitenteilen (8) der Sitzflächenkonstruktion (3) verlaufenden Quertraverse (10) lösbar verbindet.

4. Kindersitz nach einem der Ansprüche 2 oder 3, **dadurch gekennzeichnet, dass** die Festlegevorrichtung (15) an ihrem vorderen Ende eine Aufnahme (21) zum Einhängen in den Bügel (13) und in ihrem hinteren Bereich mehrere Rippen (23) zum Einhängen in die Quertraverse (10) aufweist.

5. Kindersitz nach Anspruch 4, **dadurch gekennzeichnet, dass** die Festlegevorrichtung (15) um den Bügel (13) schwenkbar ist mit der Aufnahme (21) als Lager.

6. Kindersitz nach Anspruch 5, **dadurch gekennzeichnet, dass** der Schwenkbereich der Festlegevorrichtung (15) durch an der Sitzflächenkonstruktion (3) vorgesehene Mittel (29) und/oder an der Festlegevorrichtung (15) vorgesehene Mittel (27) begrenzt wird.

7. Kindersitz nach Anspruch 6, **dadurch gekennzeichnet, dass** eine in der Sitzflächenkonstruktion (3) zum Tragen der Polsterung eingespannte Matte (29) ein den Schwenkbereich der Festlegevorrichtung (15) begrenzendes Mittel bildet.

8. Kindersitz nach einem der Ansprüche 1 bis 7, **dadurch gekennzeichnet, dass** die Festlegevorrichtung (15) als Rampe ausgebildet ist, die von hinten nach vorne ansteigt.

9. Kindersitz nach einem der Ansprüche 1 bis 8, **dadurch gekennzeichnet, dass** die Rückenlehne (5) mit einer Gurthaltervorrichtung (85) versehen ist, die wenigstens einen schwenkbaren, exzentrisch gelagerten Gurthalter (90) aufweist und die in wenigstens einer ersten Betriebsart einen Sicherheitsgurt in eine Zugrichtung klemmt, wobei die Schwenkachse des Gurthalters (90) wenigstens teilweise quer zur Zugrichtung des Sicherheitsgurts verläuft und wobei die Gurthaltervorrichtung (85) den Sicherheitsgurt in die andere Zugrichtung freigibt.

10. Kindersitz nach Anspruch 9, **dadurch gekennzeichnet, dass** der Sicherheitsgurt in die Gurthaltervorrichtung (85) einbringbar ist, ohne dass diese von Hand zu betätigen ist.

11. Kindersitz nach Anspruch 9 oder 10, **dadurch gekennzeichnet, dass** der Sicherheitsgurt bei Anlage an den Gurthalter (90) letzteren im Falle eines Zuges mitnimmt.

12. Kindersitz nach Anspruch 11, **dadurch gekennzeichnet, dass** der Gurthalter (90) wenigstens auf einem Teil seiner Außenfläche eine erhöhte Reibung aufweist.

13. Kindersitz nach einem der Ansprüche 9 bis 12, **dadurch gekennzeichnet, dass** der Gurthalter (90) an seinem freien Ende eine Abrundung (94) aufweist.

14. Kindersitz nach einem der Ansprüche 9 bis 20, **dadurch gekennzeichnet, dass** die Gurthaltervorrichtung (85) als tragenden Teil einen Bügel (87) aufweist, der an der Rückenlehne (5) angeordnet ist und einen Abschnitt (87') aufweist.

15. Kindersitz nach Anspruch 14, **dadurch gekennzeichnet, dass** der Gurthalter (90) in eine Schwenkrichtung federbelastet und gegenüber dem Abschnitt (87') des Bügels (87) vorgespannt ist.

16. Kindersitz nach Anspruch 14 oder 15, **dadurch gekennzeichnet, dass** der Gurthalter (90) in der ersten Betriebsart den Sicherheitsgurt zwischen sich und dem Abschnitt (87') festklemmt.

17. Kindersitz nach einem der Ansprüche 14 bis 16, **dadurch gekennzeichnet, dass** der Gurthalter (90) auf einem zum Abschnitt (87') parallelen Endabschnitt des Bügels (87) gelagert ist.

18. Kindersitz nach einem der Ansprüche 9 bis 17, **dadurch gekennzeichnet, dass** die Gurthaltervorrichtung (85) auf der linken und auf der rechten Seite des Kindersitzes je einen Gurthalter (90) aufweist.

19. Kindersitz nach einem der Ansprüche 9 bis 18, **dadurch gekennzeichnet, dass** die Gurthaltervorrichtung (85) in einer zweiten Betriebsart den Sicherheitsgurt lose umschließt.

20. Kindersitz nach Anspruch 14 und 18, **dadurch gekennzeichnet, dass** die Gurthaltervorrichtung (85) eine schwenkbare Nase (94') aufweist, die bei Anlage an den Abschnitt (87') eine ringförmig geschlossene Öffnung zum Umschließen des Sicherheitsgurtes bildet.

21. Kindersitz nach Anspruch 20, **dadurch gekennzeichnet, dass** die Nase (94') am freien Ende des Gurthalters (90) vorgesehen ist.

22. Kindersitz nach einem der Ansprüche 1 bis 21, **dadurch gekennzeichnet, dass** an der Rückenlehne (5) in der Höhe und/oder Breite einstellbare, seitliche Stützen (42, 43) vorgesehen sind.

23. Kindersitz nach Anspruch 14 und 22, **dadurch gekennzeichnet, dass** der Bügel (87) am Träger (44) der seitlichen Stützen (42, 43) befestigt ist.

24. Kindersitz nach einem der Ansprüche 1 bis 23, **dadurch gekennzeichnet, dass** die Rückenlehne (5) relativ zur Sitzflächenkonstruktion (3) nach vorne klappbar ist.

25. Kindersitz nach einem der Ansprüche 1 bis 24, **dadurch gekennzeichnet, dass** die Sitzflächenkonstruktion (3) in ihrer Neigung gegenüber einem Unterbau (1) einstellbar ist.

## Claims

1. Child seat, in particular for a motor vehicle, having a backrest (5), a seat-surface structure (3) which defines the seat surface and one part (13) of which can be adjusted and secured in the longitudinal direction relative to those remaining parts (8, 29) of the seat-surface structure (3) which define the seat surface, and having a securing device (15) which is provided in the region of the seat surface and releasably secures the adjustable part (13) of the seat-surface structure (3) relative to the remaining parts (8, 10) thereof, **characterised in that** the securing device (15) itself defines at least a portion of the seat surface.

2. The child seat as claimed in claim 1, **characterised in that** the adjustable part of the seat-surface structure (3) is configured as a hoop (13) which, guided by guide bushes (11), can be moved within a region of displacement.

3. The child seat as claimed in claim 2, **characterised in that** the securing device (15) releasably connects the hoop (13) to at least one crosspiece (10) running between two side parts (8) of the seat-surface structure (3).

4. The child seat as claimed in one of claims 2 or 3, **characterised in that** at its front end the securing device (15) has a socket (21) to attach it to the hoop (13) and in its rear region has a plurality of ribs (23) to attach it to the crosspiece (10).

5. The child seat as claimed in claim 4, **characterised in that** the securing device (15) can be pivoted about the hoop (13) with the socket (21) as a bearing.

6. The child seat as claimed in claim 5, **characterised in that** the pivoting region of the securing device (15) is restricted by means (29) provided on the seat-surface structure (3) and/or by means (27) provided on the securing device (15).

7. The child seat as claimed in claim 6, **characterised in that** a mat (29) which is fixed in the seat-surface structure (3) for the purpose of supporting the upholstery forms a means which restricts the pivoting region of the securing device (15).

8. The child seat as claimed in one of claims 1 to 7, **characterised in that** the securing device (15) is configured as a ramp which rises from the rear to the front.

9. The child seat as claimed in one of claims 1 to 8, **characterised in that** the backrest (5) is equipped with a belt-retaining device (85) which has at least one pivotable, eccentrically mounted belt retainer (90) and which in at least a first operating mode clamps a seatbelt in one pulling direction, the pivot axis of the belt retainer (90) running at least partially transversely to the pulling direction of the seatbelt and the belt-retaining device (85) releasing the seatbelt in the other pulling direction.

10. The child seat as claimed in claim 9, **characterised in that** the seatbelt can be introduced into the belt-retaining device (85) without the latter having to be actuated by hand.

11. The child seat as claimed in claim 9 or 10, **characterised in that** when the seatbelt bears against the belt retainer (90) it carries the latter along with it in the event of being pulled.

12. The child seat as claimed in claim 11, **characterised in that** the belt retainer (90) has increased friction at least over part of its outer surface.

13. The child seat as claimed in one of claims 9 to 12, **characterised in that** the belt retainer (90) has a rounded portion (94) on its free end.

14. The child seat as claimed in one of claims 9 to 13, **characterised in that** the belt-retaining device (85) has, as the supporting part, a hoop (87) which is arranged on the backrest (5) and incorporates a part (87').

15. The child seat as claimed in claim 14, **characterised in that** the belt retainer (90) is spring-loaded in a pivoting direction and is pretensioned relative to the part (87') of the hoop (87).

16. The child seat as claimed in claim 14 or 15, **characterised in that** in the first operating mode the belt retainer (90) clamps the seatbelt between itself and the part (87').

17. The child seat as claimed in one of claims 14 to 16, **characterised in that** the belt retainer (90) is mounted on an end portion of the hoop (87) that is parallel to the part (87').

18. The child seat as claimed in one of claims 9 to 17, **characterised in that** the belt-retaining device (85) has a respective belt retainer (90) on the left and on the right side of the child seat.

19. The child seat as claimed in one of claims 9 to 18, **characterised in that** in a second operating mode the belt-retaining device (85) loosely surrounds the seatbelt.

20. The child seat as claimed in claims 14 and 18, **characterised in that** the belt-retaining device (85) has a pivotable projection (94') which, when it bears against the part (87'), forms an annularly closed opening for surrounding the seatbelt.

21. The child seat as claimed in claim 20, **characterised in that** the projection (94') is provided on the free end of the belt retainer (90).

22. The child seat as claimed in one of claims 1 to 21, **characterised in that** lateral supports (42, 43) which can be adjusted in height and/or width are provide on the backrest (5).

23. The child seat as claimed in claims 14 and 22, **characterised in that** the hoop (87) is fastened to the supporting means (44) of the lateral supports (42, 43).

24. The child seat as claimed in one of claims 1 to 23, **characterised in that** the backrest (5) can be folded forward relative to the seat-surface structure (3).

25. The child seat as claimed in one of claims 1 to 24, **characterised in that** the inclination of the seat-surface structure (3) can be adjusted relative to a substructure (1).

## Revendications

1. Siège pour enfant, en particulier pour un véhicule automobile, comportant un dossier (5), une construction de surface de siège (3) définissant la surface de siège, dont une partie (13) est réglable et fixable dans la direction de la longueur vis-à-vis des autres parties (8, 29) définissant la surface de siège de la construction de surface de siège (3), et un dispositif de fixation (15) prévu dans la zone de la surface de siège, lequel fixe de façon amovible la partie réglable (13) de la construction de surface de siège (3) par rapport aux autres parties (8, 10) de celle-ci, **caractérisé par le fait que** le dispositif de fixation (15) lui-même définit au moins une partie de la surface de siège.

2. Siège pour enfant selon la revendication 1, **caractérisé par le fait que** la partie réglable de la construction de surface de siège (3) est réalisée sous la forme d'un étrier (13), lequel est déplaçable guidé par des douilles de guidage (11) à l'intérieur d'une zone de déplacement.

3. Siège pour enfant selon la revendication 2, **caractérisé par le fait que** le dispositif de fixation (15) relie de façon amovible l'étrier (13) avec au moins une traverse transversale (10) s'étendant entre deux parties latérales (8) de la construction de surface de siège (3).

4. Siège pour enfant selon l'une des revendications 2 ou 3, **caractérisé par le fait que** le dispositif de fixation (15) présente sur son extrémité avant un logement (21) pour l'accrochage dans l'étrier (13) et dans sa zone arrière plusieurs nervures (23) pour l'accrochage dans la traverse transversale (10).

5. Siège pour enfant selon la revendication 4, **caractérisé par le fait que** le dispositif de fixation (15) est basculable autour de l'étrier (13) avec le logement (21) comme palier.

6. Siège pour enfant selon la revendication 5, **caractérisé par le fait que** la zone de basculement du dispositif de fixation (15) est limitée par un moyen (29) prévu sur la construction de surface de siège (3) et/ou un moyen (27) prévu sur le dispositif de fixation (15).

7. Siège pour enfant selon la revendication 6, **caractérisé par le fait qu'**une natte (29) fixée dans la construction de surface de siège (3) pour supporter le rembourrage forme un moyen limitant la zone de basculement du dispositif de fixation (15).

8. Siège pour enfant selon l'une des revendications 1 à 7, **caractérisé par le fait que** le dispositif de fixation (15) est réalisé sous la forme d'une rampe qui monte de l'arrière vers l'avant.

9. Siège pour enfant selon l'une des revendications 1 à 8, **caractérisé par le fait que** le dossier (5) est doté d'un dispositif (85) de support de sangle, qui présente au moins un support de sangle (90) monté de façon excentrique, basculable, et qui dans au moins un premier mode de service bloque une sangle de sécurité dans une direction de traction, à l'occasion de quoi l'axe de basculement du support de sangle (90) s'étend au moins en partie transversalement à la direction de traction de la sangle de sécurité et à l'occasion de quoi le dispositif (85) de support de sangle débloque la sangle de sécurité dans l'autre direction de traction.

10. Siège pour enfant selon la revendication 9, **caractérisé par le fait que** la sangle de sécurité est apte à être mise en place dans le dispositif (85) de support de sangle sans que celle-ci doive être actionnée à la main.

11. Siège pour enfant selon l'une des revendications 9 ou 10, **caractérisé par le fait que** la sangle de sécurité lors de la disposition sur le support de sangle (90) entraîne ce dernier dans le cas d'une traction.

12. Siège pour enfant selon la revendication 11, **caractérisé par le fait que** le support de siège (90) présente au moins sur une partie de sa surface extérieure un frottement augmenté.

13. Siège pour enfant selon l'une des revendications 9 à 12, **caractérisé par le fait que** le support de sangle (90) présente sur son extrémité libre un arrondi (94).

14. Siège pour enfant selon l'une des revendications 9 à 20, **caractérisé par le fait que** le dispositif (85) de support de sangle présente comme partie portante un étrier (87), qui est disposé sur le dossier (5) et présente une section (87').

15. Siège pour enfant selon la revendication 14, **caractérisé par le fait que** le support de sangle (90) est chargé par ressort dans une direction de basculement et est mis en pré-tension vis-à-vis de la section (87') de l'étrier (87).

16. Siège pour enfant selon l'une des revendications 14 ou 15, **caractérisé par le fait que** le support de sangle (90) bloque dans le premier mode de service la sangle de sécurité entre lui et la section (87').

17. Siège pour enfant selon l'une des revendications 14 à 16, **caractérisé par le fait que** le support de sangle (90) est monté sur une section d'extrémité de l'étrier (87) parallèle à la section (87').

18. Siège pour enfant selon l'une des revendications 9 à 17, **caractérisé par le fait que** le dispositif (85) de support de sangle présente sur le côté gauche et sur le côté droit du siège pour enfant à chaque fois un support de sangle (90).

19. Siège pour enfant selon l'une des revendications 9 à 18, **caractérisé par le fait que** le dispositif (85) de support de sangle dans un deuxième mode de service entoure sans serrer la sangle de sécurité.

20. Siège pour enfant selon les revendications 14 à 18, **caractérisé par le fait que** le dispositif (85) de support de sangle présente un talon basculant (94'), lequel forme lors de la disposition sur la section (87') une ouverture fermée en forme d'anneau pour entourer la sangle de sécurité.

21. Siège pour enfant selon la revendication 20, **caractérisé par le fait que** le talon (94') est disposé sur l'extrémité libre du support de sangle (90).

22. Siège pour enfant selon l'une des revendications 1 à 21, **caractérisé par le fait que**, sur le dossier (5), sont prévus des appuis latéraux (42, 43) réglables en hauteur et/ou en largeur.

23. Siège pour enfant selon l'une des revendications 14 et 22, **caractérisé par le fait que** l'étrier (87) est fixé sur le support (44) des appuis latéraux (42, 43).

24. Siège pour enfant selon l'une des revendications 1 à 23, **caractérisé par le fait que** le dossier (5) est repliable vers l'avant par rapport à la structure de surface de siège (3).

25. Siège pour enfant selon l'une des revendications 1 à 24, **caractérisé par le fait que** la structure de surface de siège (3) est réglable dans son inclinaison vis-à-vis d'une base (1).
